# EUROPEAN PATENT APPLICATION

(11) **EP 2 623 685 A1**
(43) Date of publication of application: **07.08.2013**
(21) Application number: 11195525.8
(22) Date of filing: 23.12.2011
(51) Int. Cl.: E04D 5/10

(54) **Insulating and waterproofing membrane**

(71) Applicant: Sika Technology AG, 6340 Baar (CH)
(72) Inventor: Ben-Daat, Dan, Winchester, VA 22603 (US); DiPietro, Michael, Chelmsford, MA Massachusetts 02184 (US)
(74) Representative: Sika Patent Attorneys

(57) **Abstract**

The present invention is directed to a membrane material comprising of a flexible waterproof polymeric layer (1) material, a flexible layer (2) of a fabric material joined throughout the area of the first surface thereof to the polymeric layer, and a flexible layer (3) of a foam material joined throughout the area of a first surface thereon to a second surface of the layer (2) of fabric. The membrane is adapted for attachment to roof surfaces or insulation boards within an existing roof structure. The membrane is provided with a salvage edge (4) on at least one side of the membrane extending beyond at least one edge of the waterproofing membrane such that the membrane can be fastened to a substrate or attached to an adjacent sheet of waterproofing membrane. The present invention is also directed to a method for affixing more than one insulating and waterproofing membranes to a substrate which allows for fabrication of a continuous waterproof cover on said substrate.

## Description

### Field of the invention

The invention relates to insulating and waterproofing membranes for use on roofs and other surfaces, for providing a proof insulation and waterproofing as well as a method for affixing of said membranes on a substrate.

### Description of the prior art

It is well known in the art to provide insulation and waterproofing structures comprising a layer of foam insulation and layers of waterproof material overlaid thereon. The foam insulation layer is characterised by a desired R-value, that is, the insulating value of the foam insulation layer. The higher the R-value, the better insulation is provided. To provide a desired R-value, more than a single layer of insulation can be employed. The most frequently applied foam insulation layers for roofing applications are applied in form of rigid boards made of various types of foams and attached to a roof as separate insulation layer. The layer of waterproof material is thereafter overlaid onto the foam insulation board affixed on the insulation board. The most frequently applied means of attachment of the insulation board to a roof or other substrate are mechanical attachment systems, particularly those that penetrate the boards such as bolts, nails, screws, etc.. These attachment systems along with gaps between boards create "thermal bridges" which permit unrestricted heat flow and reduce the effective R-values of the boards.

One means to circumvent this problem has been described in US 2009/00644618, according to which a flexible insulation composite layer consisting of three different sub-layers of a flexible foam, a fabric material and a waterproof outer skin is affixed on top of the insulation layer, adhesively or by mechanical means. This setup has also successfully been used for hail-resistant roofing membranes as described in WO 2011/000948. The flexible foam-based material layer in combination with the fabric material layer, provides absorption of any hail storm impact energy protecting any underlying structures from cracks and tears.

One downside of adhesively or mechanically affixing a flexible insulation layer to a substrate layer, as described in US 2009/0064618, is that the conventional affixing means such as bolts, nails, screws or clamps penetrate the waterproof outer skin layer. Hence, water may migrate through the holes into the membrane and onto the substrate or roof structure. This creates problems with possible growth of mildew inside the roof structure. Adhesively attaching the flexible insulation layer on a roof or other substrate also creates problems in the choice of the adhesive, as roof structures are usually exposed to high temperature differences of up to 50°C and more which accelerates aging and deterioration of the adhesive leading to detachment of the membranes from the substrate.

Accordingly, an object of the invention is to provide an insulating and waterproofing membrane for application to a substrate, for example a foam insulation board on a roof structure, which overcomes the problems of the prior art, especially the problem of the necessity to puncture the insulation layer to affix the membrane on said substrate or the alternative necessity to use adhesives which are subject to alteration and deterioration with prolonged use. At the same time, the beneficially high R-values of the foam insulation boards as described for the insulation and waterproofing membranes in US 2009/0064618, should be maintained and the loss of heat due to thermal bridges should be minimized or even eliminated.

### Brief description of the drawings

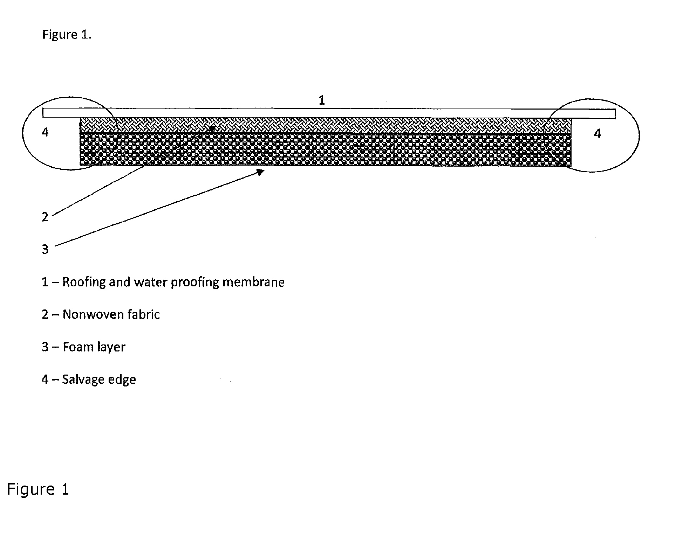

Fig. 1 is a sectional view illustrative of a insulating and waterproofing membrane embodying the features of the present invention, in particular the three layered structure with a first foam layer (3), a second non-woven fabric layer (2) and a third waterproofing membrane layer (1).

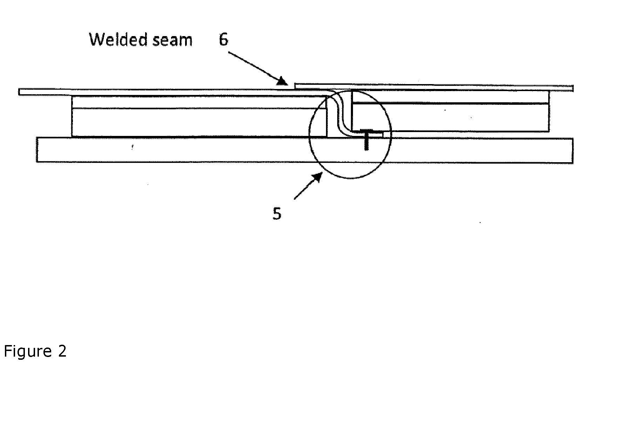

Fig. 2 is a depiction of a substrate covered with waterproofing membranes applied thereon by the method of the present application. On one side the salvage edge of the membrane (5) is folded and fixed to a substrate by mechanical fastener. An adjacent membrane layer is then placed over the fixation and the savage edge (6) is welded to form a waterproof seam.

### Description of the Invention

With the above and other objects in view as will hereinafter appear, the problem addressed by the present application is the provision of an insulating and waterproofing membrane for attachment on a substrate such as e.g. a foam insulation board disposed on a surface to be insulated and waterproofed, the insulation and waterproofing membrane being adapted to be attached to the foam insulation boards.

In accordance with a further embodiment of the invention, there is provided an insulating and waterproofing membrane, as described above, wherein the insulation and waterproofing membrane comprises a first layer of foam material (3) for overlying attachment to the substrate, a second layer of fabric material (2) affixed to and overlying the first layer, and a third layer of waterproof outer skin (1) affixed to and overlying the second layer, wherein said third layer is provided with a salvage edge (4) on at least one side of the membrane extending beyond at least one edge of the waterproofing membrane, wherein the salvage edge has the shape and dimensions to allow for fastening the salvage edge to a substrate and/or attaching the salvage edge to an adjoining sheet of proofing membrane. The salvage edge (4) as described above can be employed to affix the insulation and waterproofing membrane to a substrate without the necessity to damage the outer waterproof skin layer or to use adhesives for the attachment of the membrane layer to the substrate as will hereinafter be described. The membrane is suitable for use as a means to isolate and waterproof a substrate, hence, the use of the above described membrane for isolating and waterproofing a substrate, in particular a roof structure, is also encompassed by the present invention.

According to an other embodiment of the invention, there is provided a method for affixing more than one insulating and waterproofing membrane as described above on a substrate comprising positioning a first membrane on said substrate, affixing a salvage edge of the first membrane to the substrate using at least one fastener, positioning a second membrane on the substrate such that the first layer of the second membrane is positioned above at least part of the salvage edge of the first membrane fastened to the substrate and a salvage edge of the second membrane is positioned above at least part of the first membrane affixing the salvage edge of the second membrane positioned above at least part of the third layer of the first membrane on said layer.

In accordance with another embodiment of the invention, there is provided a substrate which is at least partially covered with more than one sheet of the flexible insulating and waterproofing membrane which is fabricated according to a method as described in the foregoing.

Referring to Fig. 1, there is shown an illustrative insulating and waterproofing membrane for attachment to a substrate such as a foam insulation layer attached to roofs, or other structure(s), to be further insulated and waterproofed. If the substrate is a foam insulation layer, this layer is preferably a thermoplastic or a thermoset material produced in semi rigid or rigid form such as a board for application to a below structure and is affixed to said structure by e.g. nails or adhesives. Appropriate thermoplastics include polyisocyanurate and polystyrene.

In accordance with the invention, the insulation and waterproofing membrane is preferably a flexible membrane which requires that the first layer is fabricated from a flexible foam material and the third layer of a waterproof outer skin (1) is also made of a material with sufficient flexibility. If the membrane is flexible, this has the advantage that the membrane can be rolled and stored and transported in rolled form, and unrolled onto a substrate onto which the membrane is applied. These rolls may in one form include strips of layer of a selected length and width. A further advantage of a flexible membrane is that it can be used as a hail-resistant roofing membrane, since the flexible membrane is capable of absorbing any hail storm impact energy.

In a further preferred embodiment the third layer of waterproof outer skin is provided with a salvage edge on at least two sides of the membrane extending beyond at least two edges on different sides of the waterproofing membrane. Such membranes allow for affixing more than two membranes on a substrate by a method as indicated above. It is especially preferred that at least one of the salvage edges or edges has/have a length of more than the thickness of the membrane.

The preferred thickness of the insulating and waterproofing membrane is about 10-30 mm, while the preferred average weight of the flexible insulation layer, including the first, second and third layers, has a weight of about 0.15 - 0.38 g/cm².

The membrane provides an extra thickness of foam and the fabric layer, and thereby increases the R-value of a roof or other structure. The outermost skin provides for waterproofing, whether or not there is in place a prior waterproofing skin.

The shape of the membrane is not particularly limited. Any shape which allows for fabrication of a two-dimensional layer on a substrate without producing interstitial spaces between the individual membrane sheets is suitable for application. However, it is preferred that the membrane is in form of a sheet, preferably a rectangular sheet.

In a further preferred embodiment the first layer (3) comprises a thermoplastic or thermosetting material which may consist of an open cell or closed cell material in form of a foam. The second layer preferably comprises a fabric material bound to the foam layer (3). The nature of the fabric material is also not particularly limited. It is possible that the fabric material is based on a woven or non-woven material. Preferably, the fabric is in form of a felt. Furthermore, it is preferred if the fabric is provided with a barrier composite or a hollow fiber construction or in particular a glass fiber mat.

The third layer of a waterproof outer skin preferably has a thickness in the range of about 0.762 - 2.54 mm (30-100 mil). In one embodiment, the waterproof outer skin layer may consist of a material frequently used in membrane proofing such as synthetic rubbers (thermosets) which may be selected from EPDM (ethylene propylene diene rubber), CSPE (chlor sulphonated polyethylene), CR and ECR, thermoplastic materials such as PVC (polyvinyl chloride), CDA, CDE, IIP, NBP (acrylo nitrile butadiene polymer), WEP and TPO (thermoplastic polyolefine) or modified bitumen.

In operation, a roof top or similar structural surface may first be covered by the above-mentioned foam insulation boards of a thickness sufficient to provide an R-value computed by a practitioner to afford heat and/or cooling retention as required by the nature of the structure.

It is apparent that the flexible insulation layer can be attached directly to a roof or other structure, which is not provided with additional insulation boards. Further, it is apparent that if the insulation board has previously been waterproofed by the application thereon of a waterproofing skin, the membrane can be applied onto said skin.

In a preferred embodiment of the method of affixing insulating in waterproofing membranes as described above, the first salvage edge is affixed on the substrates by at least one mechanical fastener. The choice of this fastener is not particularly limited, it is preferred however that the fastener is selected from bolts, nails, screws, clamps, and combinations thereof. In a further preferred embodiment, the salvage edge of the second membrane positioned above at least part of the first membrane is fixed to the first membrane by welding. In this case the third waterproof outer skin layer may advantageously be selected from thermoplastic materials. The method as described above allows for the fabrication of substrates which are at least partially covered with one or more sheets of an insulating and waterproofing membrane which is continuously insulating and waterproofing and does not contain holes or punctures which might allow the ingress of water into the membrane. Consequently, a substrate as described above is also encompassed by the present invention.

It will be understood that many additional changes in the details, materials and arrangements of parts, would have been herein described and illustrated in order to explain the nature of the invention, may be made by those skilled in the art within the principles and scope of the invention as expressed in the dependent claims.

## Claims

1. An insulating and waterproofing membrane for over-lying attachment to a structure or a foam insulating layer of material mounted on a structure; the flexible insulating and waterproofing membrane comprising:
a first layer of a foam material (3) for over-lying attachment to the structure or the foam insulating layer of material mounted on the structure; a second layer of fabric material (2) affixed to and over-lying the first layer; and
a third layer of a waterproof outer skin (1) affixed to and over-lying the second layer;
wherein said third layer is provided with a salvage edge (4) on at least one side of the membrane extending beyond at least one edge of the waterproofing membrane, the salvage edge having the shape and dimensions to allow for fastening the salvage edge to a substrate or attaching the salvage edge to an adjoining sheet of the waterproofing membrane.

2. Insulating and waterproofing membrane according to claim 1, which is flexible.

3. Insulating and waterproofing membrane according to claim 1 or 2, wherein the third layer is provided with a salvage edge (4) on at least two sides of the membrane extending beyond at least two edges on different sides of the waterproofing membrane.

4. Insulating and waterproofing membrane according to any one of claims 1 to 3, wherein at least one salvage edge (4) has a length of more than the thickness of the membrane.

5. Insulating and waterproofing membrane according to any one of the preceding claims, wherein the membrane is in form of a sheet, preferably a rectangular sheet.

6. Insulating and waterproofing membrane according to any one of the preceding claims, wherein the first layer of a foam material (3) comprises a thermoplastic or thermosetting material.

7. Insulating and waterproofing membrane according to any one of the preceding claims, wherein said first layer a foam material (3) is selected from open cell or closed cell materials.

8. Insulating and waterproofing membrane according to any one of the preceding claims, wherein said fabric material (2) is a woven or non-woven material, preferably felt.

9. Insulating and waterproofing membrane according to claim 8, wherein said fabric is provided with a barrier composite or a hollow fiber construction.

10. Insulating and waterproofing membrane according to any one of the preceding claims, wherein said membrane has a thickness of 10-30 mm and a weight of 0.15 - 0.38 g/cm².

11. A method for affixing more than one insulating and waterproofing membrane according to any one of claims 1 to 10 on a substrate comprising:
- positioning a first membrane on said substrate
- affixing a salvage edge of the first membrane to the substrate using at least one fastener
- positioning a second membrane on the substrate such that the first layer of the second membrane is positioned above at least part of the salvage edge of the first membrane fastened to the substrate and a salvage edge of the second membrane is positioned above at least part of the first membrane
- affixing the salvage edge of the second membrane positioned above at least part of the third layer of the first membrane on said layer.

12. A method according to claim 11, wherein the first salvage edge is affixed on the substrate by at least one mechanical fastener, preferably selected from bolts, nails, screws, clamps, or combinations thereof.

13. A method according to claim 11 or 12, wherein the salvage edge of the second membrane positioned above at least part of the first membrane is affixed on the first membrane by welding.

14. A substrate at least partially covered with more than one sheet of a flexible insulating and waterproofing membrane according to any one of claims 1 to 10 or obtainable according to the method of any one of claims 11 to 13.

15. Use of a more than one membrane according to any one of claims 1 to 10 for insulating and waterproofing a substrate, preferably a roof structure.
